# EUROPEAN PATENT SPECIFICATION

(11) **EP 4 516 647 B1**
(45) Date of publication and mention of the grant of the patent: **15.04.2026**
(21) Application number: 23461643.1
(22) Date of filing: 31.08.2023
(51) Int. Cl.: B62D 57/024, B62D 57/04, B62D 61/06

(54) **DEVICE MOVING ON VERTICAL SURFACES**
AUF VERTIKALEN FLÄCHEN BEWEGLICHE VORRICHTUNG
DISPOSITIF SE DEPLACANT SUR DES SURFACES VERTICALES

(43) Date of publication of application: 05.03.2025
(73) Proprietor: Uniwersytet Zielonogórski, 65-417 Zielona Góra (PL)
(72) Inventor: Ostrowski, Kacper, 65-533 Zielona Gora (PL); Paczkowski, Jacek, 67-100 Nowa Sol (PL); Kramek, Krzysztof, 65-124 Zielona Gora (PL); Mrugalski, Marcin, 65-128 Zielona Gora (PL)
(74) Representative: JD&P Patent Attorneys Joanna Dargiewicz & Partners

(56) References cited:
- CN-A- 106 005 095
- CN-A- 110 772 185
- FR-A- 974 611
- GB-A- 2 268 457
- US-A1- 2006 144 624
- US-A1- 2018 001 945
- US-A1- 2020 325 878

## Description

### Field of invention

The present invention relates to a device - a drone that moves on vertical surfaces. The invention consists in creating a force that pushes the device against a wall by releasing compressed air. This can come from a reservoir located inside the device, or from a compressor that delivers it to the device via a transmission hose. The more air that is released, or the faster the air is released, the greater the force that pushes the device against the surface, and from certain values, depending on the mass of the device, it will be possible to overcome gravity and stabilise it on a vertical surface.

### Background to the invention

From European patent application EP0652151A1, a device is known that uses a vacuum and sucks air between the wall and the device and thus attaches itself to the wall. A separate wheel drive mechanism is responsible for moving around the wall.

US patent application US2018001945A reveals a device that uses rotors and simultaneously sucks air from under the device and ejects it from the other side pressing the devices against a wall. It uses the same rotors to move.

International patent application WO2017042729A1 discloses a device that is attached to a wall on which it is supposed to move by means of four ropes. Together with controlling the lengths of these ropes, the devices can be moved to a preset location.

Chinese patent application CN 110 772 185A discloses a wall surface walking device, a high platform and a walking machine. According to this publication the walking machine is suspended below the high platform through a rope, the high platform changes the length of a hanging part of the rope, the walking machine is controlled to move up and down, an air propelling device pushes air to enable the walking machine to be pressed against the wallsurface, a movable supporting device achieves the obstacle crossing function through large-radius wheels or other special-shaped designs, and the movable supporting device can achieve wall surface steering of the walking machine through a corresponding steering device. In cooperation with electronic automatic control, communication and artificial intelligence technologies, full automation and visualization of overall work can be achieved, and remote checking and operation can be achieved.

### The aim of the invention

The aim of the present invention was to develop a device - a drone devoid of the disadvantages of drones that move on vertical surfaces using vacuum, in particular the inability to move on surfaces so deformed that the generation of vacuum is impossible, while maintaining mobility.

### The summary of the invention

This objective is achieved by the device according to claim 1.

### Brief description of drawing figures

The object of the present invention is depicted in the figures, where:
Fig. 1 shows a view of the device according to the present invention in perspective view from below;
Fig. 2 shows a top view of the device according to the present invention, the drone pressed against the wall by all the nozzles;
Fig. 3 shows a top view of the device according to the present invention, the drone being pushed in a forward (clockwise) direction by changing the angle of the nozzle;
Fig. 4 shows a top view of the device according to the present invention, the drone turns (rotates around its axis) by changing the nozzle angles.

### Detailed description of the invention

The device according to the present invention comprises electronics controlling the air flow and collecting data from the sensors, a radio communication system with the compressor control system (where pressure change is required), a compressed air inlet (1), controllable (diameter and position control) outlet nozzles (2), a crash sensor (3), a distance sensor (4), fixed wheels (5) and a 360-degree swivel wheel (6) and a system for adjusting the throughput of the outlet nozzles.

It is possible to add additional elements such as cameras, acceleration sensors, a gyroscope, a radio module for manual control, or painting/cleaning elements, etc. By increasing the number of air discharge nozzles, it is possible to generate not only downforce, but also forces that push the vehicle in a certain direction, as well as forces that make the vehicle rotate. This will be possible if each nozzle can independently change its position (angle of inclination), and the nozzle throughput is adjusted via a valve in front of the nozzle,

or by adjusting the nozzle diameter. This is, of course, assuming that the inlet pressure (set at the inlet (1)) is constant and unchanged reaching each outlet nozzle. By increasing the throughput, the force that the nozzle exerts on the device increases. Appropriate nozzle positioning and throughput allow the speed of the device moving along the wall to be controlled (the speed increases the more horizontal the nozzle and the greater the throughput).

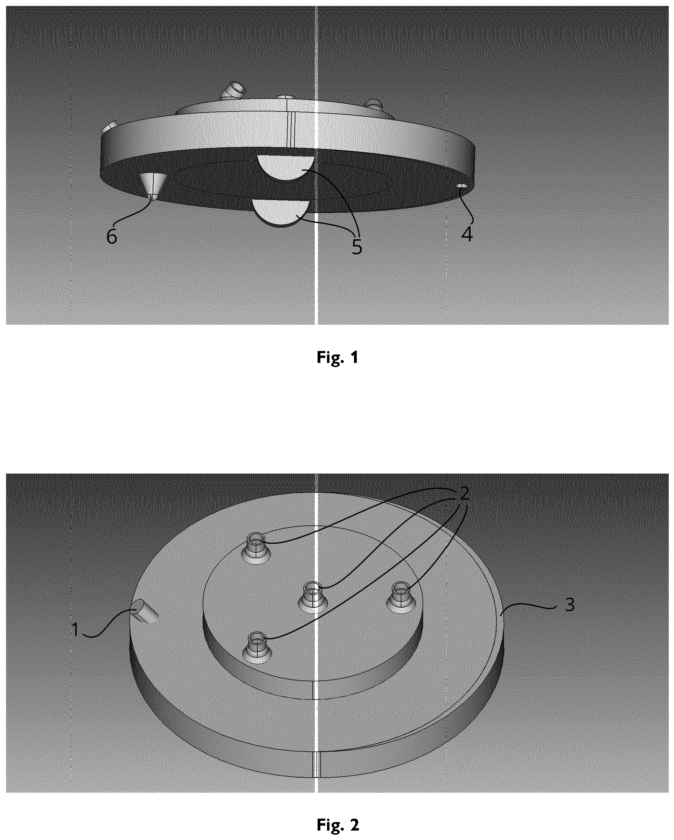

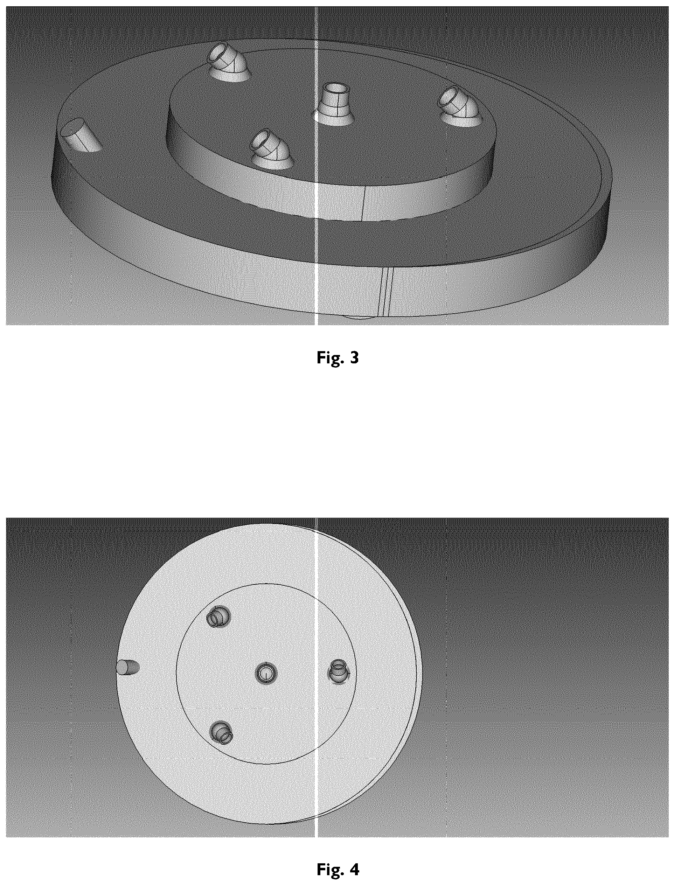

Below, Fig. 2 shows the device pressed against the wall by all the nozzles (2). Then, by changing the angle of the nozzle (2), the device is pushed to the right, Fig. 3, or it rotates (turns) - Fig. 4.

The central nozzle will most often assume a vertical position, so that it will provide pressure on the wall surface while the force vectors generated by the other nozzles mainly move the device in the desired direction. This force actually breaks down into two forces: the first enables movement and the second helps to press the device against the wall and overcome gravity. The more perpendicular the nozzle is to the wall, the greater the pushing force and the smaller the pushing force, and vice versa: the more parallel the nozzle is to the ground, the greater the proportion of the force will be contained in the component that sets the equipment in motion.

The device according to the present invention resembles a solution in which the device is equipped with rotors that suck air from the space between the device and the wall and eject it from the other side, but in this case the air is not taken from this space but from compressed air from another part of the room (e.g. near the ground where an external compressor stands) or from some tank. The difference is that the unit does not have rotors and motors driving it, and it does not create a vacuum - it does not draw in air that is against the wall. In some situations this is an advantage, as, for example:
- with powder coating, part of the paint will not be sucked up and thrown away, so it will settle entirely on the wall;
   or
- when cleaning the surface, some of the dirt will not be sucked up and sprayed into the room.

This also extends the application of the device to situations where such a vacuum cannot be created or is difficult to create, e.g. when the wall surface is very rough or hollow (such as a metal mesh/grating), as well as when the atmospheric pressure (high altitude) is very low or when there is no atmosphere. This design means that power (assuming compressed air is supplied through the inlet (1)) is only needed when the movement of the device changes (the nozzles need to be repositioned, and also to power the electronics. The function of the unit that consumes the most power, i.e. powering the motorisation of the unit, is shifted to the compressor, which is at the other end of the pressure hose connected to inlet (1). The compressor usually stands on the floor next to the wall, does not move and can therefore be powered by either a battery bank of significant capacity or an external power source (mains).

The device may incorporate a bump sensor, so that if it encounters an obstacle (such as a perpendicular wall or ceiling) when moving forward, the automation or control person will be informed that it is not possible to continue moving in that direction. The device can also incorporate a distance sensor on the underside of the unit. This makes it possible to detect the end of a wall (wall edge) or an opening in the wall, e.g. for a door.

## Claims

1. A device moving on vertical surfaces comprising a body, a control system, a source of compressed air, a compressed air inlet (1), controllable by adjusting the diameter and/or position of the outlet nozzles (2), a collision sensor (3), a distance sensor (4), fixed wheels (5) and a 360 degree swivel wheel (6) and a system for adjusting the throughput of the outlet nozzles (2) **characterised in that** the system for regulating the throughput of the outlet nozzles (2) uses an additional valve upstream of the nozzle (2) and/or either an adjustment of the nozzle diameter (2).

2. The device according to claim 1, **characterised in that** the source of compressed air is a compressed air tank.

3. The device according to claim 1, **characterised in that** the source of compressed air is a compressor.

4. The device according to claim 3, **characterised in that** the compressor is connected to the compressed air inlet (1) via a transmission hose.

5. The device according to claims 3 or 4, **characterised in that** the compressor is fixed in/on the device.

6. The device according to claims 3 or 4, **characterised in that** the compressor is located outside the device.

7. The device according to any of the claims 3-6, **characterised in that** it comprises a radio communication system with a compressor control system.

8. The device according to any of the claims 1-7, **characterised in that** it additionally comprises cameras, acceleration sensors, gyroscopes, a radio module for manual control, or utility elements such as painting/cleaning elements, etc.

9. The device according to any of the claims 1-8, **characterised in that** at least one of the outlet nozzles (2) has a substantially vertical position providing pressure against a vertical surface.

10. The device according to any of the claims 1-9, **characterised in that** at least one of the outlet nozzles (2) has an adjustable position allowing the device to move in any direction and/or rotate.

## Patentansprüche

1. Vorrichtung, die sich auf vertikalen Flächen bewegt, aufweisend einen Körper, ein Steuersystem, eine Druckluftquelle, einen Drucklufteinlass (1), der durch Einstellen des Durchmessers und/oder der Position der Auslassdüsen (2) steuerbar ist, einen Kollisionssensor (3), einen Abstandssensor (4), feste Räder (5) und ein 360-Grad-Schwenkrad (6) sowie ein System zum Einstellen des Durchsatzes der Auslassdüsen (2), **dadurch gekennzeichnet, dass** das System zum Regulieren des Durchsatzes der Auslassdüsen (2) ein zusätzliches Ventil stromaufwärts der Düse (2) und/oder entweder eine Einstellung des Düsendurchmessers (2) verwendet.

2. Vorrichtung nach Anspruch 1, **dadurch gekennzeichnet, dass** die Druckluftquelle ein Drucklufttank ist.

3. Vorrichtung nach Anspruch 1, **dadurch gekennzeichnet, dass** die Druckluftquelle ein Kompressor ist.

4. Vorrichtung nach Anspruch 3, **dadurch gekennzeichnet, dass** der Kompressor über einen Übertragungsschlauch mit dem Drucklufteingang (1) verbunden ist.

5. Vorrichtung nach Anspruch 3 oder 4, **dadurch gekennzeichnet, dass** der Kompressor in/an der Vorrichtung befestigt ist.

6. Vorrichtung nach Anspruch 3 oder 4, **dadurch gekennzeichnet, dass** der Kompressor außerhalb der Vorrichtung angeordnet ist.

7. Vorrichtung nach einem der Ansprüche 3-6, **dadurch gekennzeichnet, dass** sie ein Funkkommunikationssystem mit einem Kompressorsteuersystem aufweist.

8. Vorrichtung nach einem der Ansprüche 1-7, **dadurch gekennzeichnet, dass** sie zusätzlich Kameras, Beschleunigungssensoren, Gyroskope, ein Funkmodul zur manuellen Steuerung oder Gebrauchselemente, wie etwa Anstrich-/Reinigungselemente usw. aufweist.

9. Vorrichtung nach einem der Ansprüche 1-8, **dadurch gekennzeichnet, dass** mindestens eine der Auslassdüsen (2) eine im Wesentlichen vertikale Position aufweist, die Druck gegen eine vertikale Fläche bereitstellt.

10. Vorrichtung nach einem der Ansprüche 1-9, **dadurch gekennzeichnet, dass** mindestens eine der Auslassdüsen (2) eine einstellbare Position aufweist, die es der Vorrichtung ermöglicht, sich in eine beliebige Richtung zu bewegen und/oder sich zu drehen.

## Revendications

1. Dispositif se déplaçant sur des surfaces verticales comprenant un corps, un système de commande, une source d'air comprimé, un orifice d'entrée d'air comprimé (1), pouvant être commandé par ajustement du diamètre et/ou de la position des buses de sortie (2), un capteur de collision (3), un capteur de distance (4), des roues fixes (5) et une roue pivotante à 360 degrés (6) et un système pour ajuster le débit des buses de sortie (2), **caractérisé en ce que** le système pour réguler le débit des buses de sortie (2) utilise une soupape supplémentaire en amont de la buse (2) et/ou un ajustement du diamètre de buse (2).

2. Dispositif selon la revendication 1, **caractérisé en ce que** la source d'air comprimé est un réservoir d'air comprimé.

3. Dispositif selon la revendication 1, **caractérisé en ce que** la source d'air comprimé est un compresseur.

4. Dispositif selon la revendication 3, **caractérisé en ce que** le compresseur est relié à l'orifice d'entrée d'air comprimé (1) par le biais d'un tuyau de transmission.

5. Dispositif selon la revendication 3 ou la revendication 4, **caractérisé en ce que** le compresseur est fixé dans/sur le dispositif.

6. Dispositif selon la revendication 3 ou la revendication 4, **caractérisé en ce que** le compresseur est situé à l'extérieur du dispositif.

7. Dispositif selon n'importe laquelle des revendications 3 à 6, **caractérisé en ce qu'**il comprend un système de radiocommunication avec un système de commande de compresseur.

8. Dispositif selon n'importe laquelle des revendications 1 à 7, **caractérisé en ce qu'il** comprend en outre des caméras, des capteurs d'accélération, des gyroscopes, un module radio pour la commande manuelle, ou des éléments utilitaires tels que des éléments de peinture/nettoyage, etc.

9. Dispositif selon n'importe laquelle des revendications 1 à 8, **caractérisé en ce qu'**au moins l'une des buses de sortie (2) présente une position sensiblement verticale exerçant une pression contre une surface verticale.

10. Dispositif selon n'importe laquelle des revendications 1 à 9, **caractérisé en ce qu'**au moins l'une des buses de sortie (2) présente une position ajustable permettant au dispositif de se déplacer dans n'importe quelle direction et/ou de tourner.
